# DEMANDE DE BREVET EUROPEEN

(11) **EP 1 271 733 A1**
(43) Date de publication de la demande: **02.01.2003**
(21) Numéro de dépôt: 02291468.3
(22) Date de dépôt: 12.06.2002
(51) Int. Cl.: H02G 3/04

(54) **Socle de goulotte à largeur variable**

(30) Priorité: 18.06.2001 FR 0107961
(71) Demandeur: LEGRAND, F-87000 Limoges (FR); LEGRAND SNC, F-87000 Limoges (FR)
(72) Inventeur: Jadaud, Alain, 72240 Tennie (FR); Decore, Bertrand, 72650 La Chapelle Saint Aubin (FR)
(74) Mandataire: CABINET BONNET-THIRION

(57) **Abrégé**

L'invention concerne un socle (100) de goulotte comportant au moins deux pièces d'adaptation (110, 120) qui définissent une partie au moins de son contour transversal.

Selon l'invention, lesdites pièces d'adaptation sont configurées de manière à pouvoir être deux à deux directement ajustées l'une à l'autre suivant un recouvrement variable.

## Description

La présente invention concerne un socle de goulotte comportant au moins deux pièces d'adaptation qui définissent une partie au moins de son contour transversal.

On connaît déjà notamment des documents FR 2 693 048, GB 2 174 254 et EP 0 863 594 des socles de goulotte modulables du type précité.

Selon le document FR 2 693 048, le socle modulable présente une profondeur variable avec une partie de base comprenant un fond bordé par deux ailes latérales de hauteurs différentes et un élément de rehausse apte à être rapporté sur l'extrémité de l'aile latérale la plus petite de la partie de base.

Les socles modulables décrits dans les documents GB 2 174 254 et EP 0 863 594 présentent des largeurs variables.

Plus particulièrement, selon le document GB 2 174 254, le socle modulable est constitué d'un fond et de deux pièces d'extrémité à rapporter par encliquetage sur les bords d'extrémité longitudinaux dudit fond, différentes formes de pièces d'extrémité pouvant être utilisées pour augmenter la largeur dudit socle ou modifier sa section.

Selon le document EP 0 863 594, le socle modulable comporte au moins deux pièces assemblées entre elles et, éventuellement, une troisième pièce à rapporter entre les deux premières pièces pour augmenter la largeur dudit socle.

Ainsi, dans les trois cas précités, l'augmentation de la profondeur ou de la largeur dudit socle est réalisée par l'ajout d'une pièce supplémentaire ou par le remplacement d'une des pièces préalablement assemblées entre elles, ce qui augmente le coût de fabrication dudit socle.

Par rapport à l'état de la technique précité, l'invention propose un nouveau socle de goulotte modulable qui est simple et économique à réaliser et qui peut se décliner en plusieurs largeurs afin de permettre à l'utilisateur de choisir pour le socle qu'il souhaite utiliser le meilleur compromis entre la largeur la moins imposante et une capacité de câblage suffisante.

Plus particulièrement, l'invention propose un socle de goulotte du type défini en introduction, caractérisé en ce que lesdites pièces d'adaptation sont configurées de manière à pouvoir être deux à deux directement ajustées l'une à l'autre suivant un recouvrement variable.

Ainsi, avantageusement, les pièces d'adaptation du socle de goulotte conforme à l'invention peuvent être individuellement stockées en grande quantité dans un espace relativement réduit. En outre, l'installateur peut, en ajustant lesdites pièces d'adaptation l'une par rapport à l'autre, réaliser des socles de goulotte différents adaptés à chacun de ses chantiers.

Avantageusement, l'ajustement direct selon un recouvrement variable des pièces d'adaptation du socle de goulotte conforme à l'invention permet à l'installateur de faire varier notamment la dimension de l'ouverture longitudinale du socle de goulotte, ce qui est particulièrement intéressant puisque, le plus souvent, l'ouverture longitudinale du socle est définie en fonction de l'étendue de la série d'appareillages électriques qui sont montés dans ledit socle en vigueur dans la région géographique de commercialisation dudit socle. Ainsi, le périmètre de commercialisation d'un socle de goulotte conforme à l'invention est donc particulièrement élargi.

D'autres caractéristiques non limitatives et avantageuses du socle de goulotte conforme à l'invention sont les suivantes :
- l'une au moins des pièces d'adaptation comporte, longitudinalement, en parallèle, au moins deux moyens d'engagement d'un premier type, tandis que l'autre comporte, longitudinalement, au moins un moyen d'engagement d'un deuxième type propre à coopérer avec l'un quelconque des moyens d'engagement du premier type de la première pièce d'adaptation ;
- l'une des pièces d'adaptation comporte, longitudinalement, en parallèle, une pluralité de moyens d'engagement du premier type, tandis que l'autre des pièces d'adaptation comporte, longitudinalement, une pluralité de moyens d'engagement du deuxième type propres à coopérer avec les moyens d'engagement du premier type de la première pièce d'adaptation ;
- le moyen d'engagement du premier type comprend une nervure longitudinale présentant une section en forme de crochet orientée dans une première direction, et le moyen d'engagement du deuxième type comprend une nervure longitudinale présentant une section en forme de crochet orientée dans une deuxième direction opposée à la première direction ;
- la nervure longitudinale constituant le moyen d'engagement du premier type s'étend vers l'intérieur du socle, tandis que la nervure longitudinale constituant le moyen d'engagement du deuxième type s'étend vers l'extérieur du socle à partir d'une plate-forme faisant partie de la pièce d'adaptation correspondante et située en retrait par rapport au contour transversal dudit socle ;
- chaque moyen d'engagement du premier type est porté par une partie de ladite pièce d'adaptation qui forme une partie du fond du socle, et chaque moyen d'engagement du deuxième type est porté par une partie de ladite pièce d'adaptation qui forme une autre partie du fond du socle ;
- le socle comprend une première pièce d'adaptation qui forme une première aile latérale et une partie du fond du socle, et une seconde pièce d'adaptation qui forme une deuxième aile latérale et une autre partie du fond dudit socle ;
- chaque aile latérale comprend un retour à l'équerre pourvu de moyens de montage d'un couvercle de fermeture ;
- le socle comprend au moins une pièce d'adaptation intermédiaire apte à être interposée entre deux pièces d'adaptation successives pour former des compartiments à l'intérieur dudit socle, ladite pièce d'adaptation intermédiaire comportant à cet effet une cloison, l'une au moins des deux pièces d'adaptation successives comportant, longitudinalement, en parallèle, au moins deux moyens d'engagement du premier type, tandis que l'autre des deux pièces d'adaptation successives comportant, longitudinalement, au moins un moyen d'engagement du deuxième type, et la pièce d'adaptation intermédiaire comportant, d'un côté de ladite cloison, longitudinalement, au moins un moyen d'engagement du deuxième type apte à coopérer avec l'un quelconque des moyens d'engagement du premier type de la première pièce d'adaptation, et, de l'autre côté de ladite cloison, longitudinalement, au moins deux moyens d'engagement du premier type aptes à coopérer individuellement avec ledit moyen d'engagement du deuxième type de la seconde pièce d'adaptation ;
- la cloison de la pièce d'adaptation intermédiaire porte en tête, à l'équerre, deux retours dirigés à l'opposé l'un de l'autre et pourvus chacun de moyens de montage d'un couvercle de fermeture ; et
- chaque pièce d'adaptation est réalisée d'une seule pièce par moulage d'une matière plastique.

La description qui va suivre en regard des dessins annexés, donnés à titre d'exemples non limitatifs, fera bien comprendre en quoi consiste l'invention et comment elle peut être réalisée.

Sur les dessins annexés ;
- les figures 1 à 3 sont des vues en bout de trois socles de goulotte différents conformes à l'invention, réalisés à partir de deux mêmes pièces d'adaptation ; et
- la figure 4 est une variante de réalisation du socle de goulotte conforme à l'invention.

En préliminaire, on notera que les éléments identiques ou similaires des différents modes de réalisation de l'invention représentés sur les différentes figures seront, dans la mesure du possible, référencés par les mêmes signes de référence et ne seront pas décrits à chaque fois.

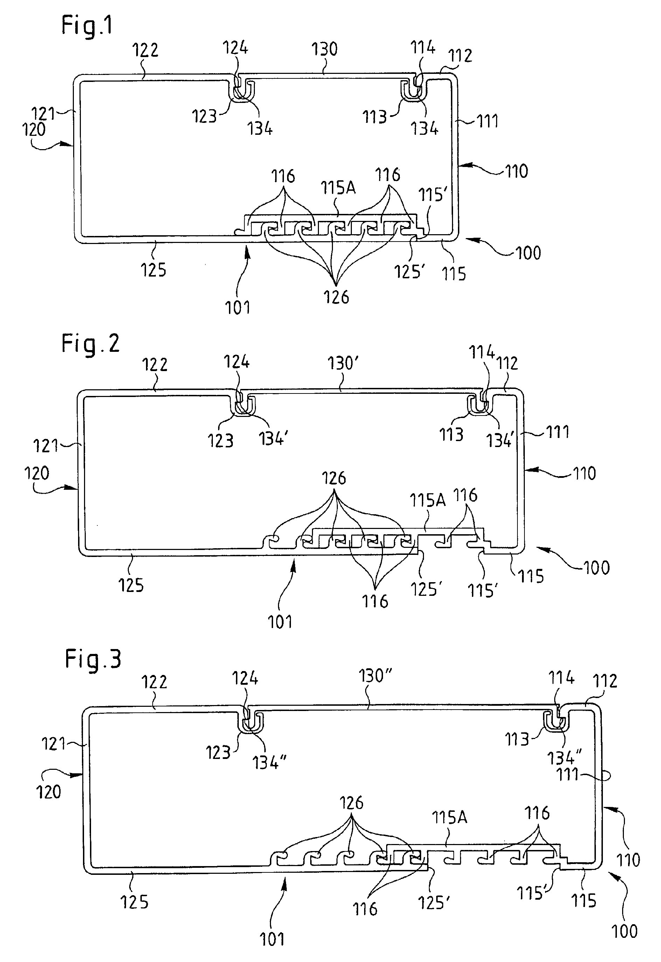

Sur les figures 1 à 3, on a représenté trois socles 100 de goulotte présentant chacun une section en U ou en C avec une ouverture longitudinale destinée à être fermée par un couvercle de fermeture 130, 130', 130".

Chaque socle 100, représenté sur les figures 1 à 3, présente un fond 101 et deux ailes latérales 111, 121 parallèles, chaque aile latérale 111, 121 comportant un retour 112, 122 à l'équerre pourvu de moyens de montage 113, 114, 123, 124 d'un couvercle de fermeture 130, 130', 130''.

Ici, le retour 122 de l'une 121 des ailes latérales est plus grand que le retour 112 de l'autre aile latérale 111 de sorte que l'ouverture longitudinale du socle 100, définie entre les deux retours 112, 122, est décentrée.

Selon les exemples des socles 100 représentés, les moyens de montage de chaque couvercle de fermeture 130, 130', 130" comprennent, à l'extrémité de chacun des retours 112, 122, une gorge longitudinale 113, 123 à l'intérieur de laquelle est formé un rebord 114, 124 sur lequel vient s'accrocher une dent d'encliquetage longitudinale 134, 134', 134" prévue à proximité de chaque bord d'extrémité longitudinal du couvercle de fermeture 130, 130', 130" correspondant.

Avantageusement, les trois socles 100 de goulotte représentés sur les figures 1 à 3, qui présentent des largeurs de fond 101 différentes et des largeurs d'ouverture longitudinale différentes, sont chacun constitués à partir de deux pièces d'adaptation 110, 120 qui définissent une partie au moins du contour transversal de chacun desdits socles 100.

Les mêmes pièces d'adaptation 110, 120 sont utilisées pour réaliser chacun des socles 100 représentés sur les figures 1 à 3.

Comme le montrent les figures 1 à 3, lesdites pièces d'adaptation 110, 120 sont configurées de manière à pouvoir être deux à deux directement ajustées l'une à l'autre suivant un recouvrement variable.

Ici, chaque socle 100 de goulotte comprend une première pièce d'adaptation 120 qui forme la première aile latérale 121 et une partie 125 du fond 101 du socle 100, et une seconde pièce d'adaptation 110 qui forme la deuxième aile latérale 111 et une autre partie 115 du fond 101 dudit socle 100.

Bien entendu, la première pièce d'adaptation 120 forme également le retour 122 à l'équerre correspondant de la première aile latérale 121 pourvu de ses moyens de montage 123, 124 d'un couvercle de fermeture 130, 130', 130", et la seconde pièce d'adaptation 110 forme le retour 112 à l'équerre de la deuxième aile latérale 111 pourvu de ses moyens de montage 113, 114 d'un couvercle de fermeture 130, 130', 130''.

Comme le montrent les figures 1 à 3, l'une au moins des pièces d'adaptation 120, 110, ici la première pièce d'adaptation 120, comporte, longitudinalement, en parallèle, au moins deux moyens d'engagement 126 d'un premier type, tandis que l'autre pièce d'adaptation, ici la seconde pièce d'adaptation 110, comporte, longitudinalement, au moins un moyen d'engagement 116 d'un deuxième type propre à coopérer avec l'un quelconque des moyens d'engagement 126 du premier type de la première pièce d'adaptation 120.

Plus particulièrement, les première et seconde pièces d'adaptation 120, 110 comportent, longitudinalement, en parallèle, respectivement, une pluralité de moyens d'engagement 126 du premier type et une pluralité de moyens d'engagement 116 du deuxième type propres à coopérer les uns avec les autres pour pouvoir directement ajuster la première pièce d'adaptation 120 à la seconde pièce d'adaptation 110 suivant un recouvrement variable pour former des socles 100 de largeurs différentes, comme cela est représenté sur les figures 1 à 3.

Ici, chaque moyen d'engagement 126 du premier type est porté par la partie 125 de la première pièce d'adaptation 120 qui forme une partie du fond 101 de chaque socle 100, et les moyens d'engagement 116 du deuxième type sont portés par la partie 115 de la seconde pièce d'adaptation 110 qui forme une autre partie du fond 101 de chaque socle 100.

Selon les exemples représentés sur les figures, chaque moyen d'engagement du premier type comprend une nervure longitudinale 126 qui s'étend à partir de la partie 125 de la pièce d'adaptation 120 vers l'intérieur du socle 100, cette nervure longitudinale 126 présentant une section en forme de crochet orientée dans une première direction.

Ainsi, la partie 125 de la première pièce d'adaptation 120 porte une pluralité de nervures longitudinales 126 parallèles présentant chacune une section en forme de crochet orientée dans une première direction. Ces nervures longitudinales 126 parallèles sont disposées à proximité d'une extrémité libre 125' de la partie 125 de la pièce d'adaptation 120 et sont espacées les unes des autres d'un espacement déterminé.

En outre, chaque moyen d'engagement du deuxième type comprend une nervure longitudinale 116 qui s'étend vers l'extérieur du socle 100 à partir d'une plate-forme 115A qui est située en retrait par rapport au contour transversal dudit socle 100.

Cette plate-forme 115A, qui fait partie de la seconde pièce d'adaptation 110, rejoint la partie 115 de celle-ci par un décrochement 115'.

Les nervures longitudinales 116 portées par la plate-forme 115A présentent chacune une section en forme de crochet orientée dans une deuxième direction opposée à ladite première direction selon laquelle est orientée la forme de crochet des sections des nervures longitudinales 126.

Les nervures longitudinales 116 constituant les moyens d'engagement du deuxième type sont disposées en parallèle et espacées les unes des autres d'un espacement déterminé. Elles sont réparties sur toute la longueur de la plate-forme 115A.

Comme le montrent les figures 1 à 3, les première et seconde pièces d'adaptation 120, 110 sont directement ajustées l'une à l'autre en engageant les extrémités de certaines nervures longitudinales 116 portées par la seconde pièce d'adaptation 110 sous les extrémités de certaines nervures longitudinales 126 portées par la première pièce d'adaptation 120, les extrémités correspondantes des nervures longitudinales 116 et 126 ne coopérant en butée que d'un côté, ce qui, par conséquent, ne s'oppose pas à un mouvement rétrograde de dégagement de l'une des deux pièces d'adaptation 120, 110 en l'absence du couvercle de fermeture 130, 130', 130" monté sur les retours 112, 122 des ailes latérales 111, 121 du socle 100.

Bien entendu, les moyens d'engagement des différentes pièces d'adaptation 110, 120 du socle 100 peuvent être différents, il peut s'agir de moyens de recouvrement éventuellement complétés par des crans pour un contrôle de positionnement.

On pourrait également prévoir que les moyens d'engagement de l'une et l'autre pièces d'adaptation 110, 120 coopèrent entre eux par encliquetage.

Le socle 100 de la figure 1 présente la plus petite largeur. Dans ce cas, la seconde pièce d'adaptation 110 est ajustée sur la première pièce d'adaptation 120 de sorte que l'ensemble des nervures longitudinales 126 portées par la première pièce d'adaptation 120 coopère avec les nervures longitudinales 116 correspondantes portées par la seconde pièce d'adaptation 110, l'extrémité libre 125' de la partie 125 de la première pièce d'adaptation 120 venant en butée contre le décrochement 115' prévu à la jonction entre la partie 115 et la plate-forme 115A de la seconde pièce d'adaptation 110.

De façon concomitante, le socle 100 représenté sur la figure 1 présente la plus petite largeur d'ouverture longitudinale fermée par le couvercle de fermeture 130.

Dans le cas du socle 100 représenté sur la figure 1, les pièces d'adaptation 110 et 120 présentent un recouvrement maximal de leur partie 115, 125 constituant le fond 101 du socle 100.

L'espacement prévu entre les nervures longitudinales 126 portées par la partie 125 de la pièce d'adaptation 120, et l'espacement prévu entre les nervures longitudinales 116 portées par la partie 115 de la pièce d'adaptation 110, sont déterminés de façon à permettre un dégagement mutuel desdites nervures longitudinales 116 et 126 par translation d'une pièce d'adaptation par rapport à l'autre.

Sur la figure 2, on a représenté un socle 100 dont la largeur est supérieure à celle du socle 100 représenté sur la figure 1.

En outre, le socle 100 représenté sur la figure 2 présente, en correspondance, une plus grande largeur d'ouverture longitudinale fermée par une plus grande largeur de couvercle de fermeture 130'.

Pour ce faire, la seconde pièce d'adaptation 110 a été ajustée par rapport à la première pièce d'adaptation 120 de manière à diminuer le recouvrement de leurs parties respectives 115, 125 constituant le fond 101 du socle 100.

Ainsi, une des nervures longitudinales 126 portées par la partie 125 de la première pièce d'adaptation 120 ne coopère avec aucune nervure longitudinale 116 de l'autre pièce d'adaptation 110, la plate-forme 115A ayant été reculée par rapport à la partie 125.

La coopération des nervures longitudinales 116 et 126 reste bien entendu identique pour les socles de différentes largeurs.

Dans le cas du socle 100 représenté sur la figure 2, l'extrémité libre 125' de la partie 125 de la pièce d'adaptation 120 n'est plus en butée contre le décrochement 115' de la pièce d'adaptation 110.

Sur la figure 3, on a représenté un socle 100 de largeur encore supérieure à celle du socle 100 représenté sur la figure 2, mais toujours formé par l'ajustement entre elles des première et seconde pièces d'adaptation 120, 110.

Pour ce faire, l'ajustement de la seconde pièce d'adaptation 110 sur la pièce d'adaptation 120 est réalisé de telle manière que le recouvrement des deux pièces l'une par rapport à l'autre est minimal.

Ainsi, comme le montre la figure 3, seules les deux nervures longitudinales situées à proximité de l'extrémité libre 125' de la partie 125 de la première pièce d'adaptation 120 coopèrent avec les deux nervures longitudinales 116 correspondantes situées à proximité de l'extrémité libre de la plate-forme 115A de la seconde pièce d'adaptation 110, les autres nervures longitudinales 126, 116 étant libres de tout engagement.

Bien entendu, le socle 100 de la figure 3 présente une plus grande largeur d'ouverture longitudinale fermée par une plus grande largeur de couvercle de fermeture 130".

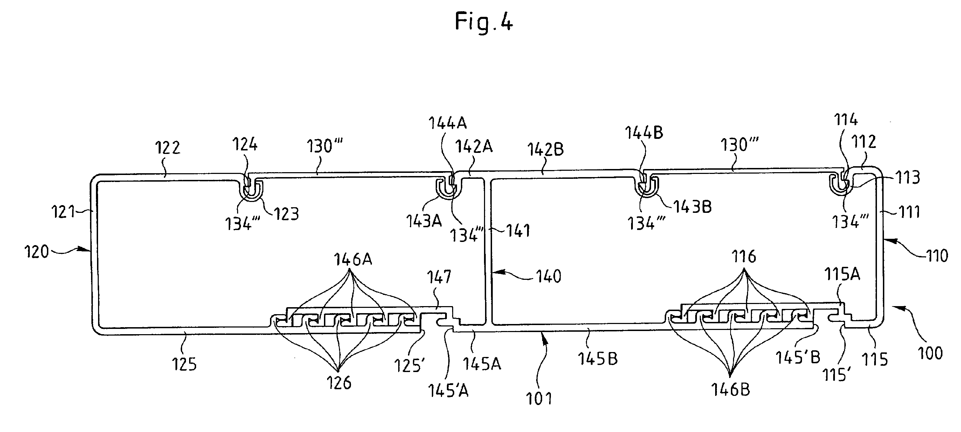

Sur la figure 4, on a représenté une variante de réalisation du socle 100 selon l'invention qui comporte, entre les première et seconde pièces d'adaptation 120, 110, une pièce d'adaptation intermédiaire 140 pour former ici deux compartiments à l'intérieur d'un socle 100 de largeur supérieure à celle des socles 100 représentés sur les figures 1 à 3.

Bien entendu, tout comme pour les socles 100 représentés sur les figures 1 à 3, les première et seconde pièces d'adaptation 120, 110 forment les ailes latérales 121, 111, avec les retours 122, 112 associés, et une partie du fond 101 du socle 100 représenté sur la figure 4.

La pièce d'adaptation intermédiaire 140 comporte une cloison 141, ici une cloison de fractionnement qui porte en tête deux retours 142A, 142B à l'équerre dirigés à l'opposé l'un de l'autre et pourvus chacun de moyens de montage d'un couvercle de fermeture 130"'.

Le retour 142B présente ici une longueur identique à celle du retour 122 de l'aile latérale 121, et le retour 142A présente une longueur identique à celle du retour 112 de l'aile latérale 111 de sorte que les deux compartiments du socle 100 formés respectivement entre les ailes latérales 111, 121 et la cloison 141 présentent des ouvertures longitudinales décentrées d'un même côté dudit socle.

Les moyens de montage prévus à l'extrémité des retours 142A, 142B sont identiques à ceux prévus à l'extrémité des retours 122 et 112 des ailes latérales 121 et 111 du socle 100. Ils comprennent alors, pour chaque retour 142A, 142B, une gorge 143A, 143B pourvue d'un rebord 144A, 144B contre lequel vient s'accrocher une dent d'encliquetage longitudinale 134''' portée par le couvercle de fermeture 130''' correspondant, à proximité de chacun de ses bords longitudinaux.

En outre, la pièce d'adaptation intermédiaire 140 comprend un pied 145A, 145B s'étendant de part et d'autre de ladite cloison et constituant une partie du fond 101 du socle 100.

En vue de son assujettissement direct aux première et seconde pièces d'adaptation 120, 110, la pièce d'adaptation intermédiaire 140 comprend, d'un côté de ladite cloison 141, longitudinalement, en parallèle, une pluralité de moyens d'engagement 146B d'un premier type portés par une partie 145B de son pied, et, de l'autre côté de ladite cloison 141, longitudinalement, en parallèle, une pluralité de moyens d'engagement 146A d'un deuxième type portés par l'autre partie 145A de son pied.

Les moyens d'engagement 146B sont identiques aux moyens d'engagement 126 du premier type portés par la partie 125 de la première pièce d'adaptation 120, et les moyens d'engagement 146A sont identiques aux moyens d'engagement 116 du deuxième type portés par la plate-forme 115A de la seconde pièce d'adaptation 110.

Ainsi, les moyens d'engagement 146B sont constitués ici par des nervures longitudinales parallèles, s'étendant vers l'intérieur du socle 100, espacées les unes des autres d'un espacement déterminé, et situées à proximité du bord libre 145'B de ladite partie 145B du pied de la pièce d'adaptation intermédiaire 140.

Les moyens d'engagement 146A sont constituées par des nervures longitudinales parallèles s'étendant vers l'extérieur du socle 100 à partir d'une plate-forme 147 située en retrait par rapport au contour transversal du socle 100.

La plate-forme 147 est raccordé par un décrochement 145'A à la partie 145A du pied de la pièce d'adaptation intermédiaire 140.

Lesdites nervures longitudinales 146A sont espacées les unes des autres d'un espacement déterminé.

Les nervures longitudinales 146B présentent chacune une section en forme de crochet orientée selon une première direction, et les nervures longitudinales 146A présentent chacune une section en forme de crochet orientée selon une deuxième direction opposée à ladite première direction.

En outre, l'espacement prévu entre les nervures longitudinales 146B est identique à celui prévu entre les nervures longitudinales 126, et l'espacement prévu entre les nervures longitudinales 146A est identique à celui prévu entre les nervures longitudinales 116.

Plus globalement, comme le montre bien la figure 4, l'extrémité de la partie 145B du pied de la pièce d'adaptation intermédiaire 140 est identique à l'extrémité de la partie 125 de la première pièce d'adaptation 120, et l'extrémité de la partie 145A du pied de la pièce d'adaptation intermédiaire 140 est identique à l'extrémité de la partie 115 de la seconde pièce d'adaptation 110.

Ainsi, des deux côtés de la cloison 141 du socle 100 de la figure 4, on retrouve une coopération de moyens d'engagement du premier et du deuxième types, identique à la coopération des moyens d'engagement du premier et du deuxième types des première et seconde pièces d'adaptation des socles 100 représentées sur les figures 1 à 3.

En particulier, d'un côté de la cloison 141, les moyens d'engagement 146A de la pièce d'adaptation intermédiaire 140 sont aptes à coopérer avec les moyens d'engagement 126 de la première pièce d'adaptation 120, et, de l'autre côté de la cloison 141, les moyens d'engagement 146B de la pièce d'adaptation intermédiaire 140 sont aptes à coopérer avec les moyens d'engagement 116 de la seconde pièce d'adaptation 110.

Cette double coopération est représentée sur la figure 4.

Pour modifier à la demande la largeur de chaque compartiment du socle et la largeur de l'ouverture longitudinale associée à chaque compartiment, il suffit de déplacer les nervures longitudinales 146A, 116 de la pièce d'adaptation intermédiaire 140 et de la seconde pièce d'adaptation 110 par rapport aux nervures longitudinales 126, 146B respectives de la première pièce d'adaptation 120 et de la pièce d'adaptation intermédiaire 140, pour modifier le recouvrement entre les plates-formes 147, 115A de la pièce d'adaptation intermédiaire 140 et de la seconde pièce d'adaptation 110, et les parties 125, 145B respectives de la première pièce d'adaptation 120 et de la pièce d'adaptation intermédiaire 140.

Bien entendu, la largeur d'un compartiment du socle 100 peut être modifiée indépendamment de la largeur de l'autre compartiment. Chaque compartiment du socle 100 se comporte individuellement comme le socle 100 monocompartimental représenté sur les figures 1 à 3.

Pour augmenter le nombre de compartiments du socle 100, on peut interposer, entre la pièce d'adaptation intermédiaire 140 et une des première et seconde pièces d'adaptation 120, 110, une nouvelle pièce d'adaptation intermédiaire (non représentée) identique ou similaire à la pièce d'adaptation intermédiaire 140, de sorte que cette nouvelle pièce d'adaptation intermédiaire s'ajuste par des moyens d'engagement mutuels sur lesdites pièces d'adaptation 110, 120 et sur ladite pièce d'adaptation intermédiaire 140 de la même manière que l'ajustement de cette dernière aux première et seconde pièces d'adaptation 110,120.

Avantageusement, les pièces d'adaptation 110, 120, 140 des socles 100 sont chacune réalisées d'une seule pièce par moulage d'une matière plastique.

La présente invention n'est nullement limitée aux modes de réalisation décrits et représentés, mais l'homme du métier saura y apporter toute variante conforme à son esprit.

En particulier, on pourra prévoir que le socle selon l'invention présente une largeur fixe et une hauteur variable. Dans ce cas, les différentes pièces d'adaptation de ce socle sont configurées pour être deux à deux directement ajustées l'une à l'autre en hauteur suivant un recouvrement variable. Cela implique que les différents moyens d'engagement mutuels soient portés par des parties des pièces d'adaptation formant les ailes latérales dudit socle.

On pourra également prévoir que les moyens d'engagement des différentes pièces d'adaptation du socle selon l'invention coopèrent entre eux par encliquetage.

Enfin, on pourra prévoir que les première et seconde pièces d'adaptation forment chacune une aile latérale de hauteur différente, et dans ce cas la pièce d'adaptation présente des retours situés également à des hauteurs différentes en correspondance avec les hauteurs différentes desdites ailes latérales pour réaliser un socle de goulotte avec des compartiments de différentes hauteurs.

## Revendications

1. Socle (100) de goulotte comportant au moins deux pièces d'adaptation (110, 120) qui définissent une partie au moins de son contour transversal, **caractérisé en ce que** lesdites pièces d'adaptation (110, 120) sont configurées de manière à pouvoir être deux à deux directement ajustées l'une à l'autre suivant un recouvrement variable.

2. Socle (100) de goulotte selon la revendication 1, **caractérisé en ce que** l'une (120) au moins des pièces d'adaptation (120, 110) comporte, longitudinalement, en parallèle, au moins deux moyens d'engagement (126) d'un premier type, tandis que l'autre (110) comporte, longitudinalement, au moins un moyen d'engagement (116) d'un deuxième type propre à coopérer avec l'un quelconque des moyens d'engagement (126) du premier type de la première pièce d'adaptation (120).

3. Socle (100) de goulotte selon la revendication 2, **caractérisé en ce que** l'une (120) des pièces d'adaptation (120, 110) comporte, longitudinalement, en parallèle, une pluralité de moyens d'engagement (126) du premier type, tandis que l'autre (110) des pièces d'adaptation (120, 110) comporte, longitudinalement, une pluralité de moyens d'engagement (116) du deuxième type propres à coopérer avec les moyens d'engagement (126) du premier type de la première pièce d'adaptation (120).

4. Socle (100) de goulotte selon l'une des revendications 2 ou 3, **caractérisé en ce que** le moyen d'engagement (126) du premier type comprend une nervure longitudinale présentant une section en forme de crochet orientée dans une première direction, et le moyen d'engagement (116) du deuxième type comprend une nervure longitudinale présentant une section en forme de crochet orientée dans une deuxième direction opposée à la première direction.

5. Socle (100) de goulotte selon la revendication 4, **caractérisé en ce que** la nervure longitudinale (126) constituant le moyen d'engagement du premier type s'étend vers l'intérieur du socle (100), tandis que la nervure longitudinale (116) constituant le moyen d'engagement du deuxième type s'étend vers l'extérieur du socle (100) à partir d'une plate-forme (115A) faisant partie de la pièce d'adaptation (110) correspondante et située en retrait par rapport au contour transversal dudit socle (100).

6. Socle (100) de goulotte selon l'une des revendications 2 à 5, **caractérisé en ce que** chaque moyen d'engagement (126) du premier type est porté par une partie de ladite pièce d'adaptation (120) qui forme une partie du fond du socle (100), et chaque moyen d'engagement (116) du deuxième type est porté par une partie de ladite pièce d'adaptation (110) qui forme une autre partie du fond du socle (100).

7. Socle (100) de goulotte selon l'une des revendications 1 à 6, **caractérisé en ce qu'**il comprend une première pièce d'adaptation (120) qui forme une première aile latérale (121) et une partie (125) du fond du socle (100), et une seconde pièce d'adaptation (110) qui forme une deuxième aile latérale (111) et une autre partie (115) du fond dudit socle (100).

8. Socle (100) de goulotte selon la revendication 7, **caractérisé en ce que** chaque aile latérale (111, 121) comprend un retour (112, 122) à l'équerre pourvu de moyens de montage d'un couvercle de fermeture (130, 130', 130", 130''').

9. Socle (100) de goulotte selon l'une des revendications 1 à 8, **caractérisé en ce qu'**il comprend au moins une pièce d'adaptation intermédiaire (140) apte à être interposée entre deux pièces d'adaptation (120, 110) successives pour former des compartiments à l'intérieur dudit socle (100), ladite pièce d'adaptation intermédiaire (140) comportant à cet effet une cloison (141), l'une au moins des deux pièces d'adaptation (120) successives comportant, longitudinalement, en parallèle, au moins deux moyens d'engagement (126) du premier type, tandis que l'autre des deux pièces d'adaptation (110) successives comportant, longitudinalement, au moins un moyen d'engagement (116) du deuxième type, et la pièce d'adaptation intermédiaire (140) comportant, d'un côté de ladite cloison (141), longitudinalement, au moins un moyen d'engagement (146A) du deuxième type apte à coopérer avec l'un quelconque des moyens d'engagement (126) du premier type de la première pièce d'adaptation (120), et, de l'autre côté de ladite cloison (141), longitudinalement, au moins deux moyens d'engagement (146B) du premier type aptes à coopérer individuellement avec ledit moyen d'engagement (116) du deuxième type de la seconde pièce d'adaptation (110).

10. Socle (100) de goulotte selon la revendication 9, **caractérisé en ce que** la cloison (141) de la pièce d'adaptation intermédiaire (140) porte en tête, à l'équerre, deux retours (142A, 142B) dirigés à l'opposé l'un de l'autre et pourvus chacun de moyens de montage d'un couvercle de fermeture (130"').

11. Socle (100) de goulotte selon l'une quelconque des revendications précédentes, **caractérisé en ce que** chaque pièce d'adaptation (110, 120, 140) est réalisée d'une seule pièce par moulage d'une matière plastique.
